# EUROPÄISCHE PATENTANMELDUNG

(11) **EP 2 735 774 A1**
(43) Veröffentlichungstag der Anmeldung: **28.05.2014**
(21) Anmeldenummer: 12194252.8
(22) Anmeldetag: 26.11.2012
(51) Int. Cl.: F16H 57/025, F16H 57/033, F16H 57/04, F16H 57/029

(54) **Kupplungsadapter**

(71) Anmelder: Siemens Aktiengesellschaft, 80333 München (DE)
(72) Erfinder: Boeing, Georg, 72108 Rottenburg (DE); Schnurr, Wolfgang, 72147 Nehren (DE)

(57) **Zusammenfassung**

Die Erfindung betrifft einen Kupplungsadapter zur Verbindung einer Getriebeeinheit und einer Motoreinheit, sowie ein Verfahren zur Herstellung eines solchen Kupplungsadapters. Der Kupplungsadapter umfasst einen getriebeseitigen Flansch (2A) mit einem getriebeseitigen Lager (3A), einen motorseitigen Flansch (2B) mit einem motorseitigen Lager (3B), eine drehbar in den Lagern (3A, 3B) gelagerte Adapterwelle (7) und mindestens einen sich ringförmig um die Adapterwelle (7) erstreckenden Schmierstoffraum (4) zur Aufnahme von Schmierstoff. Der Schmierstoffraum (4) steht mit dem getriebeseitigen Lager (3A) und/oder dem motorseitigen Lager (3B) in Verbindung, so dass der Schmierstoff von dem Schmierstoffraum (4) dem getriebeseitigen Lager (3A) bzw. dem motorseitigen Lager (3B) zuführbar ist. Auf der dem getriebeseitigen Flansch (2A) abgewandten Seite des motorseitigen Lagers (3B) ist eine die Adapterwelle (7) umgebende Schmierstoffdichtung (16B) zur Abdichtung des Schmierstoffraums (4) angeordnet.

## Beschreibung

Die Erfindung betrifft einen Kupplungsadapter zur Verbindung einer Getriebeeinheit und einer Motoreinheit, ein Baukastensystem sowie ein Verfahren zur Herstellung eines Kupplungsadapters.

Um eine Motoreinheit mit einer Getriebeeinheit verbinden zu können, ist häufig, insbesondere im Fall einer Kombination von Motoren und Getrieben unterschiedlicher Hersteller, ein zwischen den beiden Einheiten angeordneter Kupplungsadapter notwendig, der die jeweiligen Anschlüsse der beiden Einheiten aneinander anpasst und über eine Adapterwelle drehfest miteinander verbindet. Ein solcher Adapter zur Verbindung eines Elektromotors mit einem Getriebe ist aus der DE-A-196 37 361 bekannt.

Dabei ist die Adapterwelle des Kupplungsadapters in der Regel in eigenen Lagern, vorzugsweise in Wälzlagern, drehbar gelagert. Es ist bekannt, zur Reibungsverminderung in diesen Lagern lebensdauergeschmierte gekapselte Lager wie z.B. 2Z-Wälzlager einzusetzen. Die Lebensdauer der Wälzlager ist durch die Lebensdauer des Schmierstoffs begrenzt. Nach Erreichen der maximalen Lebensdauer des Schmierstoffs in den Lagern muss der Schmierstoff bzw. müssen die Lager ersetzt werden, was Wartungskosten und längere Stillstandszeiten, eventuell mit einem sich daraus ergebenden Produktionsausfall, bedeutet.

Alternativ ist es bekannt, Nachschmiermöglichkeiten mit Fett vorzusehen. Die Nachschmierung mit Fett ist in der Regel ein manueller Vorgang, welcher in regelmäßigen Abständen zu erfolgen hat. Die Planung, Organisation und Durchführung solcher regelmäßig zu wiederholender manueller Arbeiten zur Schmierung ist mit einem erheblichen Aufwand verbunden. Zudem kann die Zugänglichkeit des Kupplungsadapters eingeschränkt sein.

Es ist daher die Aufgabe der vorliegenden Erfindung, einen verbesserten Kupplungsadapter bereitzustellen.

Die Aufgabe wird gelöst durch einen Kupplungsadapter zur Verbindung einer Getriebeeinheit und einer Motoreinheit, umfassend einen getriebeseitigen Flansch mit einem getriebeseitigen Lager, einen mit dem getriebeseitigen Flansch verbundenen motorseitigen Flansch mit einem motorseitigen Lager, eine drehbar in den Lagern gelagerte Adapterwelle und mindestens einen sich ringförmig um die Adapterwelle erstreckenden Schmierstoffraum zur Aufnahme von Schmierstoff, wobei der Schmierstoffraum mit dem getriebeseitigen Lager und/oder dem motorseitigen Lager in Verbindung steht, so dass der Schmierstoff von dem Schmierstoffraum dem getriebeseitigen Lager bzw. dem motorseitigen Lager zuführbar ist, und wobei auf der dem getriebeseitigen Flansch abgewandten Seite des motorseitigen Lagers eine die Adapterwelle umgebende Schmierstoffdichtung zur Abdichtung des Schmierstoffraums angeordnet ist. Die Aufgabe wird auch gelöst durch ein Verfahren zur Herstellung eines Kupplungsadapters zur Verbindung einer Getriebeeinheit und einer Motoreinheit , umfassend folgende Schritte: Bereitstellen eines getriebeseitigen Flansches mit einem getriebeseitigen Lager und eines motorseitigen Flansches mit einem motorseitigen Lager; Verbinden des getriebeseitigen Flansches und des motorseitigen Flansches; Montieren einer Adapterwelle in den Lagern, so dass die Adapterwelle drehbar in den Lagern gelagert ist; Ausbilden mindestens eines sich ringförmig um die Adapterwelle erstreckenden Schmierstoffraums zur Aufnahme von Schmierstoff, wobei der Schmierstoffraum mit dem getriebeseitigen Lager und/oder dem motorseitigen Lager in Verbindung steht, so dass der Schmierstoff von dem Schmierstoffraum dem getriebeseitigen Lager bzw. dem motorseitigen Lager zuführbar ist; und Anordnen einer die Adapterwelle umgebenden Schmierstoffdichtung zur Abdichtung des Schmierstoffraums auf der dem getriebeseitigen Flansch abgewandten Seite des motorseitigen Lagers.

Der getriebeseitige Flansch ist zum Anbau an ein Getriebe, der motorseitige Flansch zum Anbau an einen Motor geeignet. Der Begriff "Flansch" im Sinne der vorliegenden Beschreibung ist nicht auf einen reinen Befestigungsflansch ohne Durchgang beschränkt, sondern umfasst jede Baueinheit, die an ein Getriebe oder einen Motor montierbar, insbesondere anflanschbar, ist. Insbesondere wird damit eine einstückig gefertigte Baueinheit, z.B. aus Grauguss, bezeichnet, wie ein Motorlagerschild oder eine Kupplungslaterne.

Die Begriffe "Motor" bzw. "Motoreinheit" im Sinne der vorliegenden Beschreibung sind nicht auf einen Motor, insbesondere einen Elektromotor beschränkt, sondern umfassen alle Antriebe und Antriebseinheiten zum Antrieb eines Getriebes, z.B. hydraulische Antriebe, Riemenscheiben, Kupplungen, etc.

Der erfindungsgemäße Kupplungsadapter dient als Adapter zum Verbinden einer Motorwelle einer Motoreinheit mit einem Getriebe. Der erfindungsgemäße Kupplungsadapter ist so ausgebildet, dass der Schmierstoff von dem der Aufnahme von Schmierstoff dienenden Schmierstoffraum zu Reibstellen in dem getriebeseitigen Lager bzw. dem motorseitigen Lager zuführbar ist. Der Erfindung liegt die Idee zugrunde, einen Austausch oder Ersatz des Schmierstoffs in den Lagern des Kupplungsadapters während des laufenden Betriebs des Kupplungsadapters zu ermöglichen. Da sich auf diese Weise nicht immer derselbe Schmierstoff in den Lagern befindet, verlängern sich folglich die Lebensdauer des Schmierstoffs und somit die Wartungsintervalle des Kupplungsadapters. Der erfindungsgemäße Kupplungsadapter hat somit wesentlich längere Wartungsintervalle als herkömmliche Kupplungsadapter.

Die Erfindung ermöglicht eine integrierte, einfache Nachschmierung durch Schmierstoffe wie Fett, insbesondere Fließfett, oder Öl. Durch die bessere Schmierung verlängert sich die Lebensdauer des Adapters bzw. der Antriebsgruppe. Die vorliegende Erfindung schafft somit eine einfache Möglichkeit, die Lebensdauer der Lager wesentlich zu verlängern und damit Wartungsintervalle zu verlängern, Wartungskosten und Betriebskosten zu verringern.

Die Erfindung nutzt die bestehende Schmierstoffraumgeometrie eines zweiteiligen Kupplungsadapters, um eine zusätzliche Schmiermöglichkeit bereitzustellen. Der erfindungsgemäße Kupplungsadapter kann ohne oder zumindest ohne wesentliche, aufwändige Modifikationen an seinen konstruktiven Baueinheiten realisiert werden. Es muss lediglich sichergestellt sein, dass Schmierstoff von dem Schmierstoffraum zu den Schmierstellen, d.h. den Lagern, gelangen kann. Vorzugsweise werden dazu eventuell vorhandene Deckscheiben entfernt, welche als Abdichtungen auf den zu dem Schmierstoffraum hin orientierten Seitenflächen der Lager angebracht sind.

Vorteilhafte Ausgestaltungen und Weiterbildungen der Erfindung ergeben sich aus den abhängigen Ansprüchen. Dabei kann das erfindungsgemäße Verfahren auch entsprechend den abhängigen Vorrichtungsansprüchen weitergebildet sein, und umgekehrt.

Es ist möglich, dass der Schmierstoffraum zur Aufnahme von Schmierstoff nach außen abgeschlossen ist, d.h., dass für in den Schmierstoffraum eingefüllten Schmierstoff keine Möglichkeit besteht, den Schmierstoffraum über einen anderen Weg als über die Verbindungen zu dem getriebeseitigen Lager und/oder dem motorseitigen Lager zu verlassen. Der Schmierstoff ist somit gegenüber schädlichen Einflüssen wie Staub und Schmutz geschützt. Trotzdem kann Schmierstoff aus dem Schmierstoffraum zu den Lagern gelangen, wo er seine Reibung vermindernde Funktion erfüllt, und umgekehrt; d.h. ein Austausch von Schmierstoff zwischen dem Schmierstoffraum zur Aufnahme von Schmierstoff und den Lagern kann stattfinden.

Gemäß einer bevorzugten Weiterbildung ist der Schmierstoffraum durch einen Ring, welcher sich zwischen dem getriebeseitigen Lager und dem motorseitigen Lager erstreckt, von einem radial weiter außen liegenden Hohlraum getrennt. Somit weist der zur Aufnahme von Schmierstoff vorgesehene Schmierstoffraum eine ringförmige Wand auf, welche sich zwischen dem getriebeseitigen Lager und dem motorseitigen Lager erstreckt. Diese Wand bildet eine radiale Begrenzung des Schmierstoffraums, in dem sich der Schmierstoff befindet. Somit kann verhindert werden, dass sich Schmierstoff in radial weiter außen liegende Raumbereiche oder Hohlräume verteilt, in denen der Schmierstoff keinen oder nur einen unwesentlichen Beitrag zur Nachschmierung leisten kann. Durch die den Schmierstoffraum abschließende Ringwand kann die benötigte Menge des in den Schmierstoffraum einzufüllenden Schmierstoffs verringert werden, da die Verteilung des Schmierstoffs im Wesentlichen auf die Umgebung der Lager begrenzt wird.

Gemäß einer bevorzugten Ausgestaltung ist der Ring, d.h. die ringförmige Wand, durch eine Auskragung des motorseitigen Flansches ausgebildet. Durch diese Auskragung kann eine axiale Abstützung des getriebeseitigen Lagers erfolgen, so dass das getriebeseitige Lager als ein Festlager ausgebildet ist. Eine Abdichtung eines Spaltes zwischen der Auskragung und dem getriebeseitigen Flansch gegen ein Hindurchtreten von Schmierstoff, d.h. gegen ein unerwünschtes Entweichen des Schmierstoffs aus dem Schmierstoffraum, kann durch eine geeignete Dichtung erfolgen, z.B. einen O-Ring. Es ist möglich, dass die Auskragung einstückig mit dem motorseitigen Flansch ausgebildet ist.

Es ist auch möglich, dass die ringförmige Wand durch einen Zwischenring ausgebildet ist, der zwischen die Lager eingesetzt ist. Der Zwischenring kann zur gegenseitigen axialen Abstützung der Lager dienen, wobei das getriebeseitige Lager vorzugsweise als ein Festlager ausgebildet ist. Eine Abdichtung von Spalten zwischen dem Zwischenring und den Flanschen gegen eine Passage von Schmierstoff, d.h. gegen ein unerwünschtes Entweichen des Schmierstoffs aus dem Schmierstoffraum, kann durch geeignete Dichtungen erfolgen, z.B. mittels O-Ringe.

Gemäß einer bevorzugten Ausgestaltung ist die die Adapterwelle umgebende Schmierstoffdichtung als ein Wellendichtring ausgebildet. Dieser kann unmittelbar am motorseitigen Flansch anliegen oder radial innerhalb eines Ausgleichsrings, welcher seinerseits am motorseitigen Flansch anliegt, eingebaut sein.

Gemäß einer bevorzugten Ausgestaltung umfasst der Kupplungsadapter mindestens einen Kanal, durch welchen Schmierstoff von der Umgebung des Kupplungsadapters dem Schmierstoffraum zuführbar ist und/oder durch welchen Schmierstoff von dem Schmierstoffraum entnehmbar ist. Dieser Kanal kann daher auch als ein Schmierstoffversorgungskanal bezeichnet werden. Mit "Umgebung des Kupplungsadapters" wird jeder den Kupplungsadapter umgebende Schmierstoffraum bezeichnet. Der Kanal bietet somit eine einfache Möglichkeit, von der Umgebung des Kupplungsadapters, d.h. von außen, Schmierstoff den innerhalb des Kupplungsadapters angeordneten Lagern zuzuführen, ohne dass der Kupplungsadapter geöffnet werden muss.

Es ist weiterhin möglich, dass der mindestens eine Kanal ausschließlich durch den motorseitigen Flansch verläuft, d.h. nur in einem einzigen Bauteil des Kupplungsadapters angeordnet ist. Somit kann für den getriebeseitigen Flansch ein Standard-Bauteil verwendet werden, während lediglich der motorseitige Flansch für die Anwendung in dem Kupplungsadapter mit einem Kanal versehen werden muss. Dies vereinfacht die Herstellung des Kupplungsadapters und fördert die Verwendung von standardisierten, unveränderten Bauteilen.

Es ist möglich, dass ein Ende des mindestens einen Kanals am motorseitigen Lager endet. Falls der mindestens eine Kanal durch den motorseitigen Flansch verläuft, ist es vorteilhaft, dass das wellenseitige Ende des Kanals innerhalb des motorseitigen Lagers endet. Somit kann für den getriebeseitigen Flansch ein Standard-Bauteil verwendet werden, während lediglich der motorseitige Flansch für die Anwendung in dem Kupplungsadapter mit einem Kanal versehen werden muss.

Gemäß einer bevorzugten Ausgestaltung umfasst der Kupplungsadapter mindestens zwei Kanäle, wobei ein erster Kanal der mindestens zwei Kanäle ein Einlasskanal zur Zuführung von Schmierstoff zu dem Schmierstoffraum ist und ein zweiter Kanal der mindestens zwei Kanäle ein Ablasskanal zur Entnahme von Schmierstoff aus dem Schmierstoffraum ist. Durch die kombinierte Anordnung eines Einlasskanals und eines Ablasskanals in dem Kupplungsadapter ist ein einfacher Austausch des Schmierstoffs in dem Schmierstoffraum möglich.

Weiter ist es von Vorteil, wenn über eine getriebeseitige Öffnung des Kupplungsadapters, durch welche die Adapterwelle mit der Getriebeeinheit verbindbar ist, der Schmierstoff von dem Schmierstoffraum abführbar ist. Auf diese Weise kann Schmierstoff in die Getriebeeinheit abgeleitet werden. Kombiniert man diese Ableitung von Schmierstoff über die getriebeseitige Öffnung mit einer Zuleitung von Schmierstoff, vorzugsweise über einen Einlasskanal, so ist eine Umlaufschmierung realisierbar, die vorzugsweise in einem Schmierstoffversorgungskreislauf der Getriebeeinheit integrierbar ist. Der Begriff Umlaufschmierung bezeichnet einen Schmierstoffkreislauf, bestehend aus einem Reservoir, z.B. einer Ölwanne oder einem Ölsumpf in der Getriebeeinheit, einer Zuführung zur Reibstelle, z.B. dem Einlasskanal, und einer Rückführung, z.B. der Ableitung von Schmierstoff über die getriebeseitige Öffnung. Es kann zusätzlich eine Schmierstoffaufbereitung bzw. -prozessierung, z.B. ein Ölfilter, zwischengeschaltet sein. Bei einer Umlaufschmierung kann meist mit geringeren Ölmengen im System gearbeitet werden als bei einer getrennten Schmierung von Getriebe und Kupplungsadapter Eine Umlaufschmierung kann in vorteilhafter Weise mit Schmieröl realisiert werden.

Bevorzugt kann eine Umlaufschmierung dann realisiert werden, wenn ein Wellendichtring am getriebeseitigen Lager entfällt bzw. nicht angebracht wird und ein Ölfluss zu dem Schmierstoffraum zur Aufnahme von Schmierstoff durch einen Einlasskanal erfolgt.

Es ist möglich, dass der Kupplungsadapter ein Adapter für IEC-, NEMA- und Servo-Motoren ist, d.h. den Anbau von IEC-, NEMA- und Servo-Motoren ermöglicht (IEC = International Electrotechnical Commission; NEMA = National Electrical Manufacturers Association). Dabei kann der Kupplungsadapter so gestaltet sein, dass im motorseitigen Flansch verschiedene Kupplungsvarianten wie elastische Kupplung, drehsteife Kupplung oder Rutschkupplung, und eine Rücklaufsperre integriert werden können. Der motorseitige Flansch kann aber auch nur für die Aufnahme der Lagerstelle der Adapterwelle ausgeführt sein. Diese Variante hat die kürzeste Baulänge und ist die preiswerteste Ausführung.

Es ist auch möglich, dass der Kupplungsadapter den Antrieb über ein freies Wellenende ermöglicht. Dabei ist der motorseitige Flansch so ausgeführt, dass er eine Lagerstelle der Adapterwelle umfasst. Mit dieser Ausführung kann das Drehmoment mit einer Kupplung oder Riemenscheibe, welche auf dem freien Wellenende angebracht ist, in das Getriebe eingeleitet werden.

Eine bevorzugte Weiterbildung der Erfindung ist eine Antriebsgruppe, umfassend einen Kupplungsadapter in einer der oben angeführten Ausgestaltungen und eine Getriebeeinheit und/oder eine Motoreinheit, die mit dem Kupplungsadapter verbunden ist bzw. sind.

Eine weitere bevorzugte Weiterbildung der Erfindung ist ein Baukasten-System zum Ausbilden eines Kupplungsadapters nach einem der Ansprüche 1 bis 10, umfassend mehrere, zum Verbinden mit unterschiedlichen Getriebeeinheiten geeignete, getriebeseitige Flansche mit je einem getriebeseitigen Lager, mehrere jeweils mit mindestens einem der getriebeseitigen Flansche verbindbare, zum Verbinden mit unterschiedlichen Motoreinheiten geeignete, motorseitige Flansche mit je einem motorseitigen Lager, und Adapterwellen zur jeweiligen drehbaren Lagerung in den Lagern.

Die unterschiedlichen Getriebeeinheiten können Getriebe unterschiedlicher Baugrößen umfassen. Die unterschiedlichen Motoreinheiten können Motoren unterschiedlicher Baugrößen umfassen.

Das erfindungsgemäße Kupplungsadapter-Baukastensystem ermöglicht eine Vielzahl unterschiedlicher Adaptervarianten, welche alle durch eine Ausbildung eines Schmierstoffraums im Inneren der Kupplungsadapter eine zuverlässige Schmierstoffversorgung der zur Lagerung der Adapterwelle dienenden Wälzlager sicher stellen. Dadurch wird eine wesentliche Verbesserung gegenüber herkömmlichen Adaptersystemen erreicht, bei denen eine Ausbildung eines Schmierstoffraums zur Aufnahme von Schmierstoff in allen Adaptervarianten des Baukastensystems nicht möglich ist. Im Rahmen des erfindungsgemäßen Kupplungsadaptersystems kann ein motorseitiger Flansch einer Baugröße mit unterschiedlichen getriebeseitigen Flanschen bzw. den entsprechenden Getrieben kombiniert werden. Dies wird u.a. dadurch erzielt, dass der motorseitige Flansch einer Baugröße und die unterschiedlichen getriebeseitigen Flansche eine gemeinsame Schnittstelle aufweisen. Dabei ist die motorseitige Schnittstelle des motorseitigen Flansches an die unterschiedlichen Motoren (unterschiedliche Motortypen und innerhalb jedes Motortyps unterschiedliche Baugrößen) und die getriebeseitige Schnittstelle des getriebeseitigen Flansches an die unterschiedlichen Getriebe (unterschiedliche Getriebetypen und innerhalb jedes Getriebetyps unterschiedliche Baugrößen) angepasst, die zueinander gewandten Schnittstellen je eines motorseitigen und eines entsprechenden getriebeseitigen Flansches dagegen gleich (= gemeinsame Schnittstelle).

Stellt man eine bestimmte Anzahl von motorseitigen Flanschen für unterschiedliche Motortypen und Motorbaugrößen bereit, die jeweils über eine gemeinsame Schnittstelle mit mehreren unterschiedlichen getriebeseitigen Flanschen kombinierbar sind, kann die nötige Zahl von Teilen stark reduziert werden. Durch die erfindungsgemäße Ausgestaltung des Kupplungsadapters und durch das erfindungsgemäße Kupplungsadaptersystem können somit die Kombinationsmöglichkeiten von Motoren und Getrieben insbesondere bei reduzierter Teilezahl erhöht werden. Bei geringer Lagerhaltung sind somit viele Kombinationen von Motoren und Getrieben möglich.

Gemäß einer bevorzugten Ausgestaltung umfasst das Verfahren folgenden weiteren Schritt: Ausbilden mindestens eines Kanals, durch welchen Schmierstoff von der Umgebung des Kupplungsadapters dem Schmierstoffraum zuführbar ist und/oder Ausbilden mindestens eines Kanals, durch welchen Schmierstoff von dem Schmierstoffraum abführbar ist. Dabei kann der mindestens eine Kanal nach dessen Ausbildung durch einen leicht entfernbaren Verschluss wieder verschlossen werden. Auf diese Weise bietet der Kupplungsadapter zwei unterschiedliche Nutzungsweisen: entweder wird der Kupplungsadapter herkömmlich genutzt, wenn der Verschluss nicht entfernt wird und somit der Kanal ungenutzt bleibt; alternativ kann der Kupplungsadapter, nachdem der Verschluss, z.B. durch Abziehen, entfernt wurde, über den Kanal nachgeschmiert werden.

Vorzugsweise wird der mindestens eine Kanal in dem motorseitigen Flansch ausgebildet. Dabei ist es von Vorteil, wenn der mindestens eine Kanal ausschließlich in dem motorseitigen Flansch verläuft. Dies erlaubt es, als getriebeseitigen Flansch einen Standard-Flansch zu verwenden, der in keiner Weise für die Anwendung in dem Kupplungsadapter modifiziert zu sein braucht.

Es ist bevorzugt, dass das Ausbilden des mindestens einen Kanals durch ein spanabhebendes Verfahren, insbesondere durch Bohren oder Fräsen, erfolgt.

Die Motorlagerschilder der Motoreinheiten, mit denen ein erfindungsgemäßer Kupplungsadapter verbunden wird, müssen nicht modifiziert werden. Alle für die Option "längere Wartungsintervalle" erforderlichen Eigenschaften werden in das Bauteil "motorseitiger Flansch" eingebracht. Die baulichen Merkmale sind die Einbaumöglichkeit einer die Adapterwelle umgebenden Schmierstoffdichtung zur Abdichtung des Schmierstoffraums, insbesondere in Form eines Wellendichtrings (= WDR), die Gestaltung und die Einbaumöglichkeit eines den Schmierstoffraum radial umschließenden Bauteils, welches sich zwischen dem getriebeseitigen Lager und dem motorseitigen Lager erstreckt, insbesondere in Form einer Auskragung des motorseitigen Flansches oder eines zwischen die Lager eingesetzten Zwischenrings, und ferner die gusstechnische Einbringungsmöglichkeit mindestens eines Schmierstoffkanals mit der damit verbundenen Möglichkeit, diese als Option in das Gussgehäuse nachträglich durch Fertigung einzubringen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigt
- Fig. 1: eine Ansicht eines Kupplungsadapters, der zwischen einer Getriebeeinheit und einer Motoreinheit angeordnet ist;
- Fig. 2: Schnitte von zwei unterschiedlichen Ausführungsbeispielen eines Kupplungsadapters in einer ersten, relativ langen Bauart;
- Fig. 3: Schnitte von zwei unterschiedlichen Ausführungsbeispielen eines Kupplungsadapters, die ähnlich wie die in Fig. 2 dargestellten Ausführungsbeispiele ausgestaltet, aber für längere Wartungsintervalle ausgeführt sind;
- Fig. 4: einen Schnitt eines Kupplungsadapters in einer zweiten, relativ kurzen Bauart;
- Fig. 5: einen Schnitt eines Kupplungsadapters, der ähnlich wie das in Fig. 4 dargestellte Ausführungsbeispiel ausgestaltet, aber für längere Wartungsintervalle ausführt ist;
- Fig. 6: einen Schnitt eines Kupplungsadapters mit einem freien Wellenende;
- Fig. 7: einen Schnitt eines Kupplungsadapters, der ähnlich wie das in Fig. 6 dargestellte Ausführungsbeispiel ausgestaltet, aber für längere Wartungsintervalle ausgelegt ist; und
- Fig. 8: eine teilweise als Schnitt dargestellte Seitenansicht einer Antriebsgruppe, umfassend einen Kupplungsadapter, eine Getriebeeinheit und eine Motoreinheit.

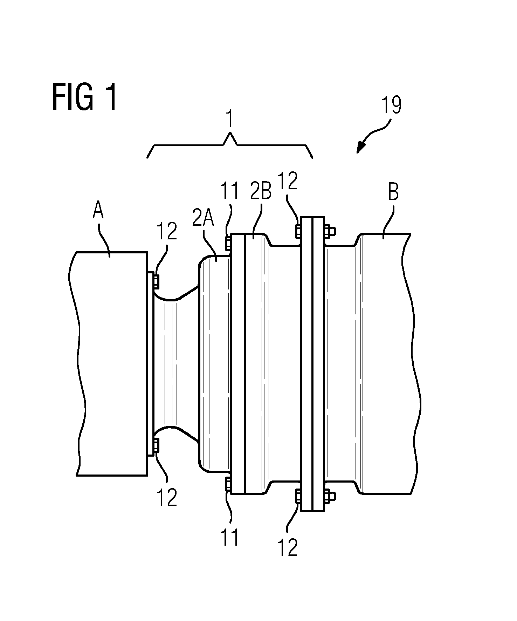

Fig. 1 zeigt eine Ansicht eines Kupplungsadapters 1, der zwischen einer Getriebeeinheit A und einer Motoreinheit B angeordnet ist. Die Motoreinheit B kann beispielsweise als ein Elektromotor gemäß der IEC-Norm für Drehstrom-Motoren ausgebildet sein, während es sich bei der Getriebeeinheit A beispielsweise um ein individuell gefertigtes Getriebe handelt. Der Kupplungsadapter 1 weist einen getriebeseitigen Flansch 2A und einen motorseitigen Flansch 2B auf, die mittels Verbindungsschrauben 11 miteinander verbunden sind. Bei dem getriebeseitigen Flansch 2A handelt es sich vorzugsweise um einen Standard-Motorlagerschild. Bei dem motorseitigen Flansch 2B handelt es sich vorzugsweise um eine Standard-Kupplungslaterne. Die Flansche 2A, 2B bestehen vorzugsweise aus Gusseisen, vorzugsweise aus Grauguss. Der Kupplungsadapter 1 ist mittels Befestigungsschrauben 12 an der Getriebeeinheit A und der Motoreinheit B montiert.

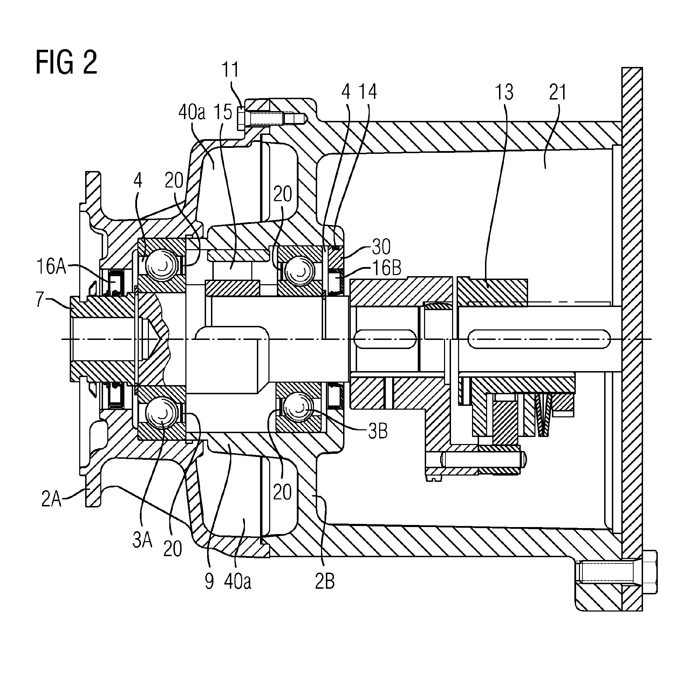

Fig. 2 zeigt Schnitte von zwei unterschiedlichen Ausführungsbeispielen eines Kupplungsadapters in einer ersten, relativ langen Bauart. Da diese Ausführungsbeispiele für einen Anbau von IEC-, NEMA- oder Servo-Motoren geeignet sind, werden sie hier als "Standardausführung" bezeichnet. Die unterschiedlichen Ausführungsvarianten beziehen sich auf den Einbau von unterschiedlichen Kupplungsvarianten und einer Rücklaufsperre. Ebenso sind unterschiedliche Ausführungen einer motorseitigen Abdichtung mittels Wellendichtringe dargestellt. Für die Standardausführung sind im Kupplungsadapter Kugellager in Z-Ausführung eingebaut.

Der Kupplungsadapter weist einen getriebeseitigen Flansch 2A und einen motorseitigen Flansch 2B auf, welche mithilfe von Verbindungsschrauben 11 fest miteinander verbunden sind. Jeder der beiden Flansche 2A, 2B umfasst jeweils ein Lager 3A, 3B. Das getriebeseitige Lager 3A wird auch als A-Lager, das motorseitige Lager 3B als B-Lager bezeichnet. Die Lager 3A und 3B können, wie in Fig. 2 dargestellt, als Rillenkugellager in Z-Ausführung ausgebildet sein. Das Nachsetzzeichen Z für Wälzlager gibt an, dass das Wälzlager eine nicht schleifende Deckscheibe, in der Regel aus Blech, vorzugsweise Stahlblech, auf einer Seite des Lagers aufweist. Derartige Lager finden Verwendung, wenn die Verschmutzungsgefahr gering und die Reibungsfreiheit ausschlaggebend ist.

Das getriebeseitige Lager 3A ist durch den motorseitigen Flansch 2B axial abgestützt und dadurch als Festlager ausgebildet. Das motorseitige Lager 3B ist als ein Loslager ausgebildet.

Bei dem getriebeseitigen Lager 3A ist die Deckscheibe 20 auf der Motorseite angeordnet, wohingegen die zum Getriebe hin gelegene Seite des getriebeseitigen Lagers 3A offen, d.h. ohne Deckscheibe, ausgebildet ist. Bei dem motorseitigen Lager 3B ist die Deckscheibe 20 auf der Getriebeseite angeordnet, wohingegen die zum Motor hin gelegene Seite des motorseitigen Lagers 3B offen, d.h. ohne Deckscheibe, ausgebildet ist.

In den Lagern 3A, 3B ist eine Adapterwelle 7 drehbar gelagert, welche zur Ausbildung einer drehfesten Verbindung zwischen einer Motoreinheit und einer Getriebeeinheit, die hier nicht dargestellt sind, dient. An der Getriebeseite des getriebeseitigen Lagers 3A ist ein getriebeseitiger Wellendichtring 16A, sowie an der Motorseite des motorseitigen Lagers 3B ein motorseitiger Wellendichtring 16B vorgesehen. Der getriebeseitige Wellendichtring 16A dichtet den Kupplungsadapter zum Getriebe hin ab. Der motorseitige Wellendichtring 16B dichtet den Kupplungsadapter zum Kupplungsraum 21 ab. Der motorseitige Wellendichtring 16B kann direkt am motorseitigen Flansch 2B anliegend (untere Hälfte von Fig. 2) oder radial innerhalb eines Ausgleichsrings 30, der entlang seinem äußeren Umfang eine Nut mit einem darin eingelegten O-Ring 14 zur Abdichtung gegenüber dem motorseitigen Flansch 2B aufweist(siehe obere Hälfte von Fig. 2), im motorseitigen Flansch 2B eingebaut sein.

Es wird jeweils der Schmierstoffraum 4 zwischen dem getriebeseitigen Lager 3A und dem getriebeseitigen Wellendichtring 16A bzw. dem motorseitigen Lager 3B und dem motorseitigen Wellendichtring 16B mit einer bestimmten Menge Fett zur Schmierung der Lager 3A, 3B gefüllt.

In der oberen Hälfte von Fig. 2 ist ein Ausführungsbeispiel dargestellt, bei dem radial innerhalb einer Auskragung 9 des motorseitigen Flansches 2B zwischen den A- und B-Lagern 3A, 3B ein Anbau-Freilauf 15 als Rücklaufsperre und auf der Adapterwelle 7 im Bereich des motorseitigen Flansches 2B eine Kupplung 13 angeordnet ist. Dabei kann es sich um eine elastische Kupplung handeln, die lediglich der Übertragung von Drehmomenten dient. Zweck einer solchen Kupplung kann eine Entkopplung von störenden Einflüssen sein, wie axialen und/oder radialen Kräften, Schwingungen oder einem Achsversatz.

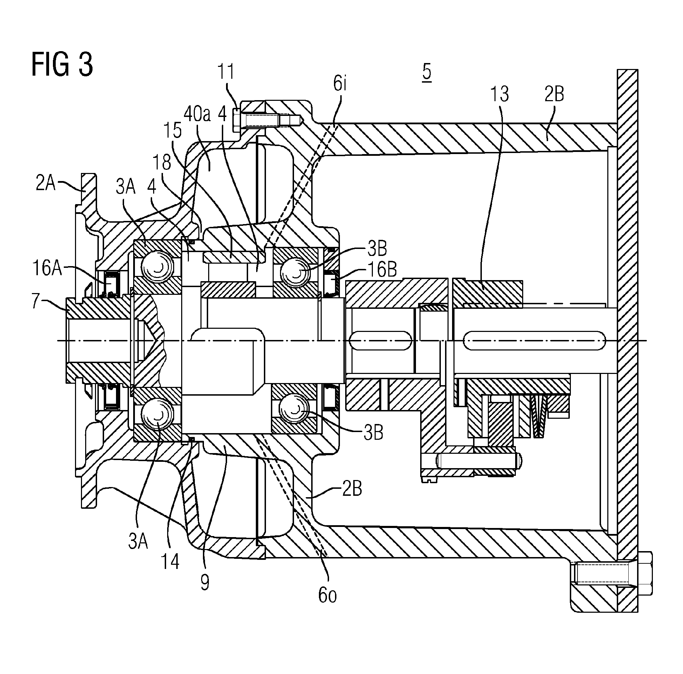

Fig. 3 zeigt in den beiden, durch die waagrechte, punktgestrichelte Linie getrennten Schnitthälften zwei unterschiedliche Ausführungsbeispiele eines Kupplungsadapters, die ähnlich wie die in Fig. 2 dargestellten Ausführungsbeispiele ausgestaltet, aber für längere Wartungsintervalle ausgeführt sind. Die dargestellten Kupplungsadapter sind für einen Anbau von IEC-, NEMA- oder Servo-Motoren geeignet. Dargestellt ist der Einbau von unterschiedlichen Kupplungsvarianten 13 und einer Rücklaufsperre 15. Ebenso sind unterschiedliche Ausführungen einer motorseitigen Abdichtung mittels Wellendichtringe 16B dargestellt.

In der Ausführung für längere Wartungsintervalle weist der Kupplungsadapter Kugellager 3A, 3B in Normalausführung auf, d.h. ohne Deckscheiben. Durch einen Einbau eines O-Ringes 14 an einer innenliegenden ringförmigen Kontaktstelle der Flansche 2A, 2B wird ein geschlossener Schmierstoffraum 4 für die Schmierstoffaufnahme ausgebildet, der durch die Auskragung 9 von einem radial weiter außen liegenden, ringförmigen Hohlraum 40a, in welchem sich kein Schmierstoff befindet, getrennt ist.

In dem motorseitigen Flansch 2B sind Bohrungen 6i und 6o für die Schmierstoffzufuhr in den bzw. den Ablauf aus dem Schmierstoffraum 4 für die Schmierstoffaufnahme eingebracht. Die zuführende Bohrung 6i ist an der obersten Stelle im motorseitigem Flansch angebracht. Die abführende Bohrung 6o ist so am motorseitigem Flansch angebracht, dass immer eine ausreichende Menge Schmieröl für die Wälzlager vorhanden ist. Durch die Kanäle 6i, 6o ist Schmierstoff von der Umgebung 5 des Kupplungsadapters dem Schmierstoffraum 4 zuführbar und/oder Schmierstoff von dem Schmierstoffraum 4 entnehmbar.

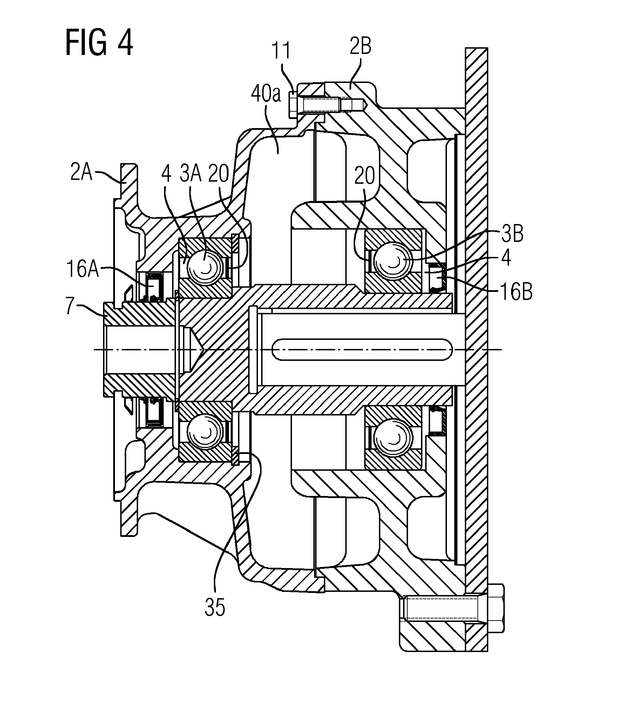

Fig. 4 zeigt einen Schnitt eines Kupplungsadapters in kurzer Bauweise. Für die Standardausführung sind im Kupplungsadapter Kugellager in Z-Ausführung eingebaut. Die Lager 3A, 3B weisen an den zueinander liegenden Seiten jeweils Deckscheiben auf, sind aber auf den jeweils äußeren Seiten ohne Deckscheibe offen.

Das getriebeseitige Lager 3A ist durch einen Sicherungsring 35 fixiert und somit als Festlager ausgebildet. Das motorseitige Lager 3B ist ein Loslager.

An der Getriebeseite des getriebeseitigen Lagers 3A ist ein getriebeseitiger Wellendichtring 16A, sowie an der Motorseite des motorseitigen Lagers 3B ein motorseitiger Wellendichtring 16B vorgesehen. Der getriebeseitige Wellendichtring 16A dichtet den Kupplungsadapter zum Getriebe hin ab. Der motorseitige Wellendichtring 16B dichtet den Kupplungsadapter zum Motor hin ab.

Es wird jeweils der Schmierstoffraum 4 zwischen dem getriebeseitigen Lager 3A und dem getriebeseitigen Wellendichtring 16A bzw. dem motorseitigen Lager 3B und dem motorseitigen Wellendichtring 16B mit einer bestimmten Menge Fett zur Schmierung der Lager 3A, 3B gefüllt. Zwischen den Lagern 3A, 3B befindet sich rings um die Adapterwelle 7 ein Hohlraum 40a, in dem sich kein Schmierstoff befindet.

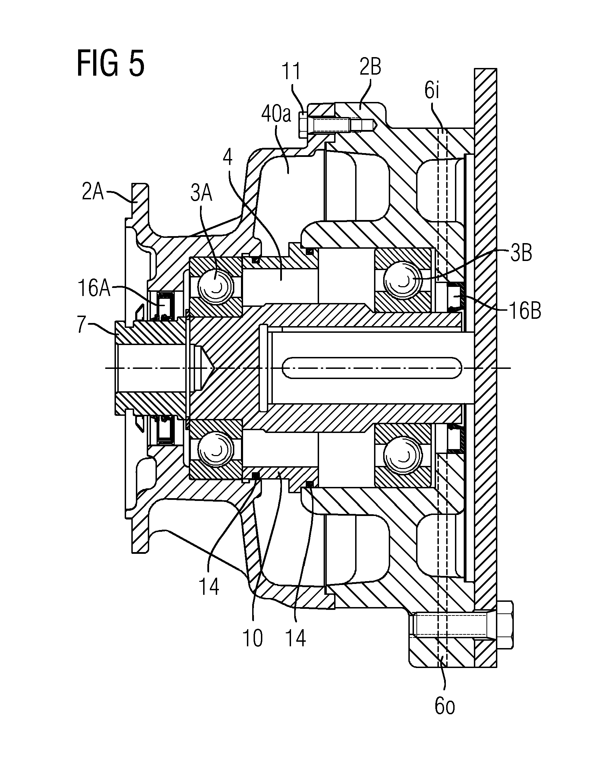

Fig. 5 zeigt einen Schnitt eines Kupplungsadapters in kurzer Bauweise in einer Ausführung für längere Wartungsintervalle. Für diese Ausführung sind im Kupplungsadapter Kugellager 3A, 3B ohne Deckscheiben eingebaut. Der Schmierstoffraum 4 für die Schmierstoffaufnahme ist durch den Einbau eines Zwischenringes 10 und von O-Ringen 14 gegenüber einem radial weiter außen liegenden Schmierstoffraum 40a abgetrennt, in welchem sich kein Schmierstoff befindet. In dem motorseitigen Flansch 2B sind Bohrungen 6 für die Schmierstoffzufuhr in bzw. den Schmierstoffablauf aus dem Schmierstoffraum 4 für die Schmierstoffaufnahme eingebracht.

Das getriebeseitige Lager 3A ist fixiert und somit als Festlager ausgebildet. Das motorseitige Lager 3B ist ein Loslager. Der Zwischenring 10 liegt mit einer getriebeseitigen Stirnfläche an dem getriebeseitigen Lager 3A und mit einer an seinem motorseitigen Ende angeordneten, vom Außenumfang des Rings 10 abstehenden Rippe an dem motorseitigen Flansch 2B an. Der Zwischenring 10 weist an seinem Außenumfang zwei Nuten mit eingelegten O-Ringen auf, nämlich eine Nut gegenüber einer Ringfläche des getriebeseitigen Flansches 2A und eine Nut gegenüber einer Ringfläche des motorseitigen Flansches 2A, durch welche eine Schmierstoffabdichtung des Schmierstoffraums 4 gegenüber dem radial weiter außen liegenden Hohlraum 40a ausgebildet ist.

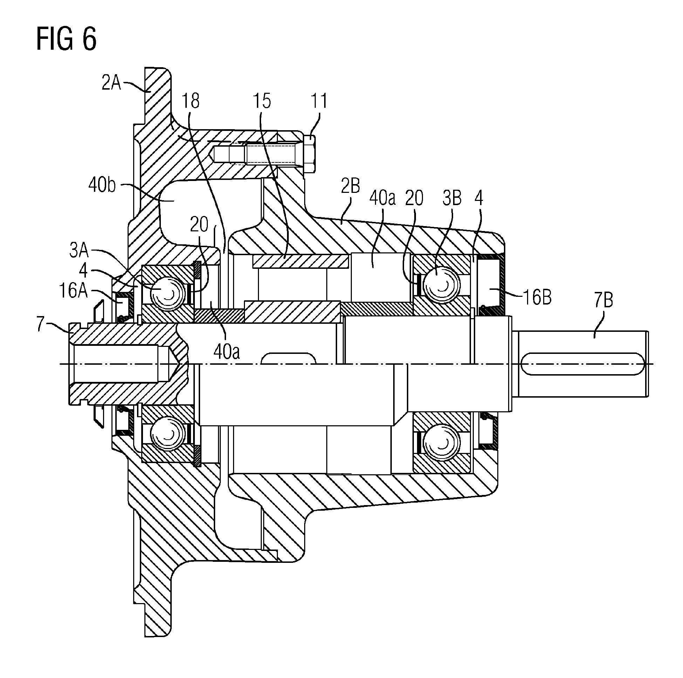

Fig. 6 zeigt einen Schnitt eines Kupplungsadapters mit einem freien Wellenende 7B der Adapterwelle 7. Dargestellt ist in der oberen Hälfte der Zeichnung der Einbau einer Rücklaufsperre 15. Außerdem ist die unterschiedliche Ausführung der motorseitigen Abdichtung durch einen Wellendichtring 16 dargestellt.

Die Lager 3A, 3B weisen an den zueinander liegenden Seiten jeweils Deckscheiben auf, sind aber auf den jeweils äußeren Seiten ohne Deckscheibe ausgebildet, d.h. offen.

An der Getriebeseite des getriebeseitigen Lagers 3A ist ein getriebeseitiger Wellendichtring 16A, sowie an der Motorseite des motorseitigen Lagers 3B ein motorseitiger Wellendichtring 16B vorgesehen. Der getriebeseitige Wellendichtring 16A dichtet den Kupplungsadapter zum Getriebe hin ab. Der motorseitige Wellendichtring 16B dichtet den Kupplungsadapter zur Umgebung ab.

Es wird jeweils der Schmierstoffraum 4 zwischen dem getriebeseitigen Lager 3A und dem getriebeseitigen Wellendichtring 16A bzw. dem motorseitigen Lager 3B und dem motorseitigen Wellendichtring 16B mit einer bestimmten Menge Fett zur Schmierung der Lager 3A, 3B gefüllt. Zwischen den Lagern 3A, 3B befindet sich rings um die Adapterwelle 7 ein Hohlraum 40a, in welchem sich kein Schmierstoff befindet. Dieser Hohlraum 40a ist über einen Spalt 18 mit einem zweiten Hohlraum 40b verbunden, in welchem sich ebenfalls kein Schmierstoff befindet.

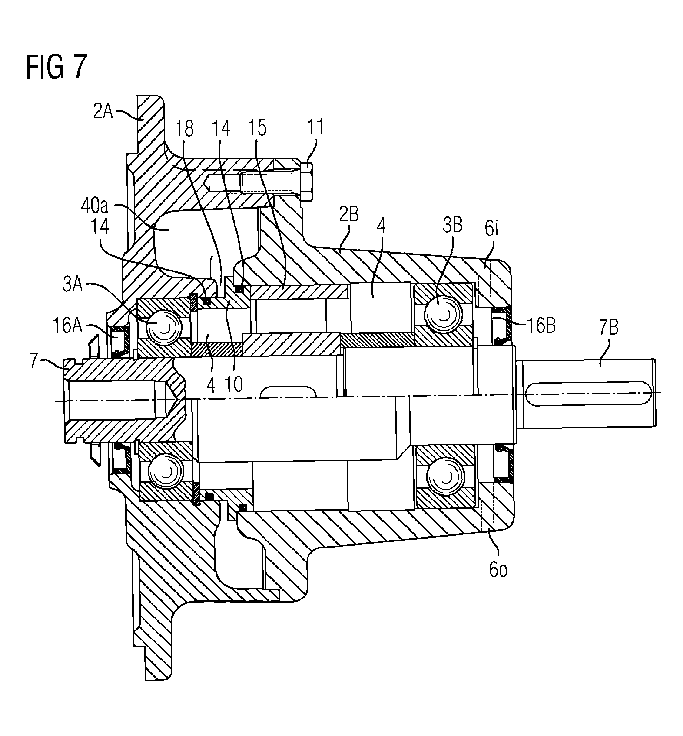

Fig. 7 zeigt einen Schnitt eines Kupplungsadapters mit einem freien Wellenende 7B der Adapterwelle 7, ähnlich zu dem in Fig. 6 dargestellten Kupplungsadapter, aber in einer Ausführung für längere Wartungsintervalle. Dargestellt ist in der oberen Hälfte der Fig. 7 der Einbau einer auf die Adapterwelle 7 wirkenden Rücklaufsperre 15, in der unteren Hälfte ist der Kupplungsadapter ohne eine Rücklaufsperre dargestellt. Außerdem ist die motorseitige und getriebeseitige Abdichtung des Schmierstoffraums 4 für die Schmierstoffaufnahme durch Wellendichtringe 16A und 16B dargestellt, welche somit die axialen Begrenzungen des Schmierstoffraums 4 für die Schmierstoffaufnahme bilden. In beiden Varianten (in der oberen bzw. unteren Hälfte) sind die nach beiden Seiten hin offenen Lager 3A, 3B in den jeweiligen Endabschnitten des Schmierstoffraums 4 für die Schmierstoffaufnahme angeordnet.

In der oberen und unteren Hälfte der Fig. 7 ist der ringförmige Schmierstoffraum 4 für die Schmierstoffaufnahme radial innen durch die Adapterwelle 7 begrenzt. Radial außen ist der Schmierstoffraum 4 durch einen die Adapterwelle 7 umgebenden und an den Flanschen 2A, 2B anliegenden Zwischenring 10 begrenzt, wobei der Zwischenring 10 zwischen einem Lageraußenring des getriebeseitigen Lagers 3A und dem Bund des Flansches 2B sitzt. Zur Abdichtung des Zwischenrings 10 gegen die Flansche 2A, 2B ist zwischen dem Zwischenring 10 und jeweils einem Flansch 2A, 2B ein O-Ring 14 eingesetzt.

In beiden Varianten ist radial außerhalb des Zwischenrings 10 ein Hohlraum 40a gebildet, in welchem sich kein Schmierstoff befindet. In dem motorseitigen Flansch 2B sind zwei Bohrungen 6i und 6o ausgebildet, je eine für die Schmierstoffzufuhr und den Schmierstoffablauf zu bzw. aus dem Schmierstoffraum 4 für die Schmierstoffaufnahme eingebracht.

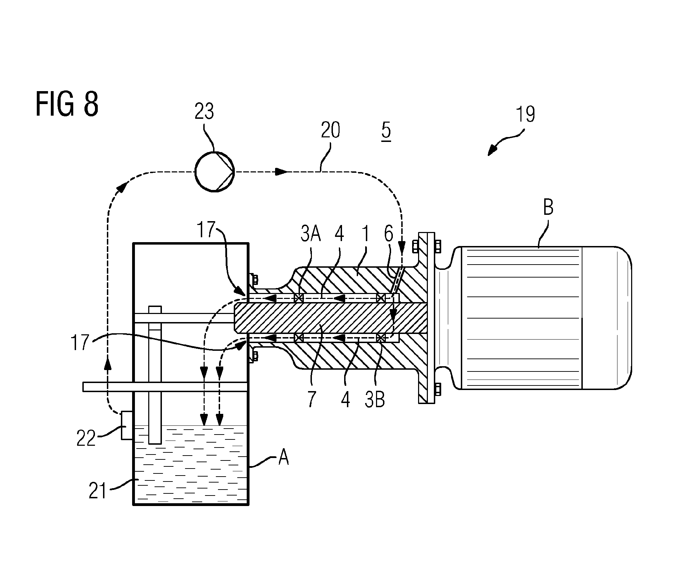

Fig. 8 zeigt eine teilweise als Schnitt dargestellte Seitenansicht einer Antriebsgruppe 19, umfassend eine Getriebeeinheit A, eine Motoreinheit B und einen zwischen dem Getriebe A und dem Motor B angeordneten Kupplungsadapter 1.

Über eine getriebeseitige Öffnung 17 des Adapter 1, durch welche die Adapterwelle 7 des Adapters 1 mit der Getriebeeinheit A verbunden ist, wird Schmieröl von dem zur Aufnahme von Schmierstoff dienenden Schmierstoffraum 4, welcher die Adapterwelle 7 umgibt und mit den Lagern 3A, 3B in Verbindung steht, abgeführt und in die Getriebeeinheit A abgeleitet. Dort sammelt sich das Öl in einem Ölsumpf 21, gelangt von dort, z.B. über Spritzschmierung, zu einem Ölauslass in der Gehäusewand des Getriebegehäuses und von dort zu einem Ölfilter 22. Über eine externe Ölleitung 5 wird das Öl von dem Ölfilter 22 außenseitig der Antriebsgruppe 19 zu einem Zuleitungskanal 6 gefördert, beispielsweise mittels einer Ölpumpe 23. Über den Zuleitungskanal 6 gelangt das Öl in den Schmierstoffraum 4 zur Aufnahme von Schmierstoff. Auf diese Weise ist eine Umlaufschmierung 20 realisierbar, die vorzugsweise in einen Schmierstoffversorgungskreislauf der Getriebeeinheit A integrierbar ist. Der Begriff Umlaufschmierung bezeichnet dabei einen Schmierstoffkreislauf 20 mit einem Reservoir, z.B. einer Ölwanne oder einem Ölsumpf 21 in der Getriebeeinheit A, einer Schmierstoffzuführung, z.B. dem Einlasskanal 6, zu den Schmierstellen 3A und 3B, und einer Rückführung des Schmierstoffs zu dem Reservoir, z.B. der Ableitung von Schmierstoff aus dem Kupplungsadapter 1 über die getriebeseitige Öffnung 17.

## Patentansprüche

1. Kupplungsadapter (1) zur Verbindung einer Getriebeeinheit (A) und einer Motoreinheit (B), umfassend
- einen getriebeseitigen Flansch (2A) mit einem getriebeseitigen Lager (3A),
- einen mit dem getriebeseitigen Flansch (2A) verbundenen motorseitigen Flansch (2B) mit einem motorseitigen Lager (3B),
- eine drehbar in den Lagern (3A, 3B) gelagerte Adapterwelle (7) und
- mindestens einen sich ringförmig um die Adapterwelle (7) erstreckenden Schmierstoffraum (4) zur Aufnahme von Schmierstoff,
wobei der Schmierstoffraum (4) mit dem getriebeseitigen Lager (3A) und/oder dem motorseitigen Lager (3B) in Verbindung steht, so dass der Schmierstoff von dem Schmierstoffraum (4) dem getriebeseitigen Lager (3A) bzw. dem motorseitigen Lager (3B) zuführbar ist, und
wobei auf der dem getriebeseitigen Flansch (2A) abgewandten Seite des motorseitigen Lagers (3B) eine die Adapterwelle (7) umgebende Schmierstoffdichtung (16B) zur Abdichtung des Schmierstoffraums (4) angeordnet ist.

2. Kupplungsadapter (1) nach Anspruch 1, wobei der Schmierstoffraum (4) durch einen Ring (9, 10), welcher sich zwischen dem getriebeseitigen Lager (3A) und dem motorseitigen Lager (3B) erstreckt, von einem radial weiter außen liegenden Hohlraum (40a) getrennt ist.

3. Kupplungsadapter (1) nach Anspruch 2, wobei der Ring (9, 10) durch eine Auskragung (9) des motorseitigen Flansches (2B) oder einen Zwischenring (10), der zwischen die Lager (3A, 3B) eingesetzt ist, gebildet ist.

4. Kupplungsadapter (1) nach einem der vorhergehenden Ansprüche, wobei die Schmierstoffdichtung (16B) ein Wellendichtring ist.

5. Kupplungsadapter (1) nach einem der vorhergehenden Ansprüche, **gekennzeichnet durch** mindestens einen Kanal (6i), **durch** welchen Schmierstoff von der Umgebung (5) des Kupplungsadapters (1) dem Schmierstoffraum (4) zuführbar ist und/oder **durch** mindestens einen Kanal (6o), **durch** welchen Schmierstoff von dem Schmierstoffraum (4) entnehmbar ist.

6. Kupplungsadapter (1) nach Anspruch 5, wobei der mindestens eine Kanal (6) ausschließlich durch den motorseitigen Flansch (2B) verläuft.

7. Kupplungsadapter (1) nach einem der Ansprüche 5 und 6, wobei ein Ende des mindestens einen Kanals (6) am motorseitigen Lager (3B) endet.

8. Kupplungsadapter (1) nach einem der Ansprüche 5 bis 7, **gekennzeichnet durch** mindestens zwei Kanäle (6i, 6o), wobei ein erster Kanal (6i) der mindestens zwei Kanäle (6i, 6o) ein Einlasskanal zur Zuführung von Schmierstoff zu dem Schmierstoffraum (4) ist und ein zweiter Kanal (6o) der mindestens zwei Kanäle (6i, 6o) ein Ablasskanal zur Entnahme von Schmierstoff aus dem Schmierstoffraum (4) ist.

9. Kupplungsadapter (1) nach einem der vorhergehenden Ansprüche, wobei über eine getriebeseitige Öffnung (17), durch welche die Adapterwelle (7) mit der Getriebeeinheit (A) verbindbar ist, der Schmierstoff von dem Schmierstoffraum (4) abführbar ist.

10. Kupplungsadapter (1) nach einem der vorhergehenden Ansprüche, wobei der Kupplungsadapter (1) ein Adapter für IEC-, NEMA und Servo-Motoren ist.

11. Antriebsgruppe (19), umfassend einen Kupplungsadapter (1) nach einem der vorhergehenden Ansprüche und eine Getriebeeinheit (A) und/oder eine Motoreinheit (B), die mit dem Kupplungsadapter (1) verbunden ist bzw. sind.

12. Baukastensystem zum Ausbilden eines Kupplungsadapters (1) nach einem der Ansprüche 1 bis 10, umfassend mehrere, zum Verbinden mit unterschiedlichen Getriebeeinheiten (A) geeignete, getriebeseitige Flansche (2A) mit je einem getriebeseitigen Lager (3A), mehrere jeweils mit mindestens einem der getriebeseitigen Flansche (2A) verbindbare, zum Verbinden mit unterschiedlichen Motoreinheiten (B) geeignete, motorseitige Flansche (2B) mit je einem motorseitigen Lager (3B), und Adapterwellen (7) zur jeweiligen drehbaren Lagerung in den Lagern (3A, 3B).

13. Verfahren zur Herstellung eines Kupplungsadapters (1) zur Verbindung einer Getriebeeinheit (A) und einer Motoreinheit (B), umfassend folgende Schritte:
Bereitstellen eines getriebeseitigen Flansches (2A) mit einem getriebeseitigen Lager (3A) und eines motorseitigen Flansches (2B) mit einem motorseitigen Lager (3B);
Verbinden des getriebeseitigen Flansches (2A) und des motorseitigen Flansches (2B);
Montieren einer Adapterwelle (7) in den Lagern (3A, 3B), so dass die Adapterwelle (7) drehbar in den Lagern (3A, 3B) gelagert ist;
Ausbilden mindestens eines sich ringförmig um die Adapterwelle (7) erstreckenden Schmierstoffraums (4) zur Aufnahme von Schmierstoff, wobei der Schmierstoffraum (4) mit dem getriebeseitigen Lager (3A) und/oder dem motorseitigen Lager (3B) in Verbindung steht, so dass der Schmierstoff von dem Schmierstoffraum (4) dem getriebeseitigen Lager (3A) bzw. dem motorseitigen Lager (3B) zuführbar ist; und
Anordnen einer die Adapterwelle (7) umgebenden Schmierstoffdichtung (16B) zur Abdichtung des Schmierstoffraums (4) auf der dem getriebeseitigen Flansch (2A) abgewandten Seite des motorseitigen Lagers (3B).

14. Verfahren nach Anspruch 13, **gekennzeichnet durch** folgenden weiteren Schritt:
Ausbilden mindestens eines Kanals (6i), **durch** welchen Schmierstoff von der Umgebung (5) des Kupplungsadapters (1) dem Schmierstoffraum (4) zuführbar ist und/oder Ausbilden mindestens eines Kanals (6o), **durch** welchen Schmierstoff von dem Schmierstoffraum (4) abführbar ist.

15. Verfahren nach Anspruch 14, wobei der mindestens eine Kanal (6) in dem motorseitigen Flansch (2B) ausgebildet wird.
